# EUROPEAN PATENT APPLICATION

(11) **EP 3 929 917 A1**
(43) Date of publication of application: **29.12.2021**
(21) Application number: 20760021.4
(22) Date of filing: 18.02.2020
(51) Int. Cl.: G10L 17/00

(54) **VOICE AUTHENTICATION APPARATUS, VOICE AUTHENTICATION METHOD AND RECORDING MEDIUM**

(30) Priority: 18.02.2019 JP 2019026871
(71) Applicant: NEC Corporation, 108-8001 Tokyo (JP)
(72) Inventor: TAKASHIMA, Shinya, Tokyo 108-8001 (JP)
(74) Representative: Betten & Resch
(86) International application number: PCT/JP2020/006179
(87) International publication number: WO 2020/171040

(57) **Abstract**

The present invention provides a voice authentication apparatus including an output unit that preferentially outputs a question with which text information indicating an answer is associated than a question with which text information indicating an answer is not associated, and an authentication unit that performs voice authentication using voice information in which an answer to a question output by the output unit is uttered.

## Description

### TECHNICAL FIELD

The present invention relates to a voice authentication apparatus, a voice authentication method and a recording medium.

### BACKGROUND ART

In a service that accepts telephone inquiries such as an insurance service, an inquiry of a bank account and a membership service, identity verification using voice authentication may be performed in order to disclose information only to a specific person.

The Patent document 1 discloses a system for specifying that a speaker on the phone is a customer registered in advance. The system compares voiceprint information extracted from the speaker's voice with a database in which voiceprints are registered, and specifies that the speaker is a customer registered in advance.

### PRECEDING TECHNICAL REFERENCES

### PATENT DOCUMENT

Patent Document 1: Japanese Patent Application Laid-open under No. JP 2010-113167

### SUMMARY OF INVENTION

### PROBLEM TO BE SOLVED BY THE INVENTION

According to the technique described in Patent Document 1, there are a plurality of groups in the database in which the voiceprints are registered, and the system compares the voiceprint of the speaker with the voiceprints of the reference person of each group. Then, the system sequentially compares the voiceprint of the speaker with the voiceprints of the registered persons belonging to the most similar group, and identifies the most similar registered person. In this case, it takes time to sequentially compare the speaker's voiceprint with the voiceprints registered in the database.

It is an example object of the present invention to realize voice authentication in a short time and with high accuracy in a situation where identity verification is performed via a telephone.

### MEANS FOR SOLVING THE PROBLEM

According to an example aspect of the present invention, there is provided a voice authentication apparatus comprising:
an output unit which preferentially outputs a question with which text information indicating an answer is associated than a question with which text information indicating an answer is not associated, and
an authentication unit which performs voice authentication using voice information acquired as an answer to the question outputted by the output unit.

According to another example aspect of the present invention, there is provided a voice authentication method comprising:
preferentially outputting a question with which text information indicating an answer is associated than a question with which text information indicating an answer is not associated, and
performing voice authentication using voice information acquired as an answer to the outputted question.

According to still another example aspect of the present invention, there is provided a recording medium storing a program making a computer execute:
a process which preferentially outputs a question with which text information indicating an answer is associated than a question with which text information indicating an answer is not associated, and
a process which performs voice authentication using voice information acquired as an answer to the outputted question.

### EFFECT OF THE INVENTION

According to the present invention, it is possible to perform authentication by voice in a short time and with high accuracy.

### BRIEF DESCRIPTION OF THE DRAWINGS

FIG. 1 is an example of a functional block diagram of a voice authentication system of an example embodiment.
FIG. 2 is an example of a functional block diagram of the voice authentication apparatus of the example embodiment.
FIG. 3 is a diagram schematically illustrating an example of information processed by the voice authentication apparatus of the example embodiment.
FIG. 4 is a diagram illustrating an example of a hardware configuration of the voice authentication apparatus according to the example embodiment.
FIG. 5 is a flowchart illustrating an example of a processing flow of the voice authentication apparatus of the example embodiment.
FIG. 6 is an example of a functional block diagram of the voice authentication apparatus of the example embodiment.
FIG. 7 is a flowchart illustrating an example of the processing flow of the voice authentication apparatus of the example embodiment.
FIG. 8 is an example of a functional block diagram of the voice authentication apparatus of the example embodiment.
FIG. 9 is a flowchart illustrating an example of the processing flow of the voice authentication apparatus of the example embodiment.
FIG. 10 is an example of a functional block diagram of the voice authentication apparatus of the example embodiment.

### EXAMPLE EMBODIMENTS

### <First example embodiment>

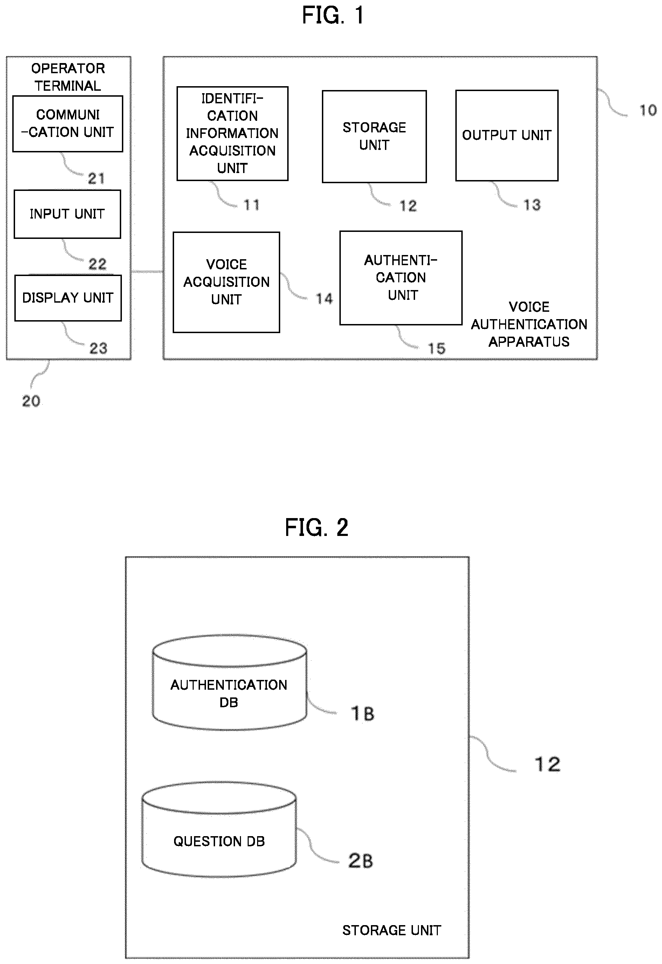

A first example embodiment of the present invention will be described. Using the functional block diagram of FIG. 1, an overall view of the voice authentication system of the example embodiment will be described. The voice authentication apparatus 10 is connected to the operator terminal 20, and transmits and receives information necessary for voice authentication.

Voice authentication is an authentication method that identifies the person who spoke using the feature amount of the voice. As the voice authentication method, there are a method for registering and authenticating voice information of a specific phrase (text-dependent method) and a method for registering and authenticating voice information of non-fixed natural conversation without depending on a phrase (text-independent method). Since the text-dependent method uses speech voice data of a specific phrase for registration and authentication, it is possible to perform authentication with shorter speech than the text-independent method that does not depend on a phrase, and with high accuracy. Further, even in the text-independent method, if the text information indicated by the voice used for the verification is known, authentication can be performed with high accuracy.

The voice authentication apparatus 10 includes an identification information acquisition unit 11, a storage unit 12, an output unit 13, a voice acquisition unit 14, and an authentication unit 15. The operator terminal 20 is a terminal used by an operator in a call center or the like, and includes a communication unit 21, an input unit 22 and a display unit 23. These configurations are connected via a communication network, such as the Internet, and can communicate with each other.

The example embodiment will be described with reference to an example in which an operator engaged in a telephone response work at a call center performs identification of a customer on the phone using voice authentication. In the example embodiment, the "customer" is a person who is the target of the identification.

The operator is a person who receives a telephone inquiry from the customer and responds to the inquiry. The operator operates the operator terminal 20 during the telephone response work. In the event that the operator discloses restricted information such as personal information or the like to the customer who made the inquiry by telephone, the operator needs to confirm that the customer is the person to whom the personal information can be disclosed, before disclosing the information. In this example embodiment, voice authentication is used to confirm the customer's identity.

The operator terminal 20 is exemplified by, but is not limited to, a personal computer, a smart phone, a tablet terminal, a mobile phone, a dedicated terminal, and the like.

The input unit 22 receives the input of the identification information that identifies the customer, and transmits the inputted information to the identification information acquisition unit 11. The operator inputs the identification information heard from the customer to the input unit 22. The input unit 22 may be implemented as a device for receiving an input from the operator. The input unit 22 may include, but is not limited to, a keyboard connected to a personal computer, a touch panel of a smartphone or a tablet terminal, and the like.

The identification information acquisition unit 11 acquires the identification information of the customer. The identification information may be received from an external terminal, or inputted to the voice authentication apparatus 10. The identification information is exemplified by, but is not limited to, a telephone number, a registration number, a name, a postcode, an address, a birth date, a phonation phrase, an iris, a facial image, a fingerprint, a palmprint, a vein, a gait, and the like.

The concept of the database included in the storage unit 12 will be described with reference to FIG. 2. The storage unit 12 includes an authentication database 1B in which the feature amounts of the customer's voices are recorded, and a question database 2B in which questions used to authenticate the customer are recorded. The question database 2B records information indicating questions to be asked by the operator to the customers when the customer's identity is confirmed and information indicating answers to those questions in a manner associated with each other.

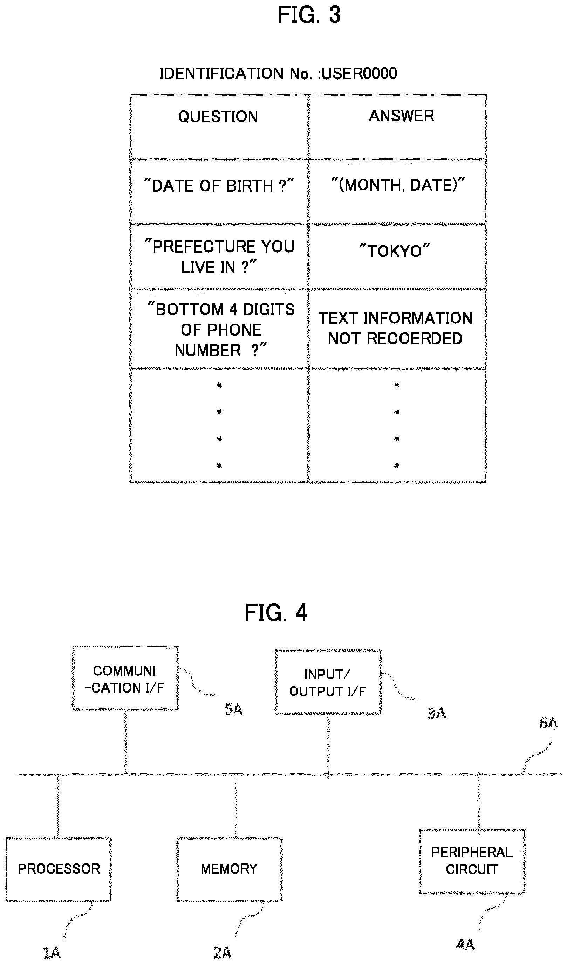

The information recorded in the question database 2B will be described with reference to FIG. 3. FIG. 3 is an example of information recorded in the question database 2B. The question database 2B records questions and answers used to authenticate customers in association with each other. The combinations of questions and answers are recorded in association with the customer identification information.

In the example in FIG. 3, the answer to the recorded question "What is the date of birth?" is recorded as the text information "MONTH, DATE". On the other hand, for the recorded question "What is the bottom four digits of your mobile phone?", no text information indicating the answer is recorded. In this way, the question database 2B records several types of questions with which answers are recorded as the text information and questions with which answers are not recorded as the text information.

The output unit 13 uses the identification information acquired by the identification information acquisition unit 11 to specify a question associated with the customer indicated by the identification information from the questions recorded in the question database 2B, and preferentially outputs a question with which the answer is recorded in association with the text information. The output unit 13 may output an instruction to display information on the display unit 23, or the output unit 13 itself may have the function of the display unit 23.

The display unit 23 displays information that the operator refers to. The display unit 23 displays the information received from the output unit 13. The information displayed by the display unit 23 may include, for example, information necessary for identity verification of the customer, information indicating a question to be asked by the operator to the customer, results of the voice authentication, or the like. The display unit 23 is a device to output visual information, and a display, a lamp or the like is exemplified, but is not limited thereto.

Instead of transmitting information to the operator by the display unit 23, a speaker (not shown) may transmit information received from the output unit 13 to the operator in voice. Also, the display unit 23 may include a speaker (not shown). In that case, the display unit 23 outputs the information received from the output unit 13 as audio information and visual information. The speakers not shown are exemplified by, but not limited to, those embedded in a personal computer or a headset connected to a tablet terminal, or those provided in a smartphone or tablet terminal.

The communication unit 21 receives the voice of the customer during the telephone communication between the operator terminal 20 and the customer, and transmits the received voice to the voice acquisition unit 14. It is sufficient that the voice transmitted by the communication unit 21 to the voice acquisition unit 14 includes at least a portion of the voice of the customer. For example, the communication unit 21 transmits the voice of the customer answering to the question, after the operator asks the question to the customer. The communication unit 21 may be designed to acquire the voice of the customer simply after asking the question.

The communication unit 21 may be implemented as a device used by the operator to make telephone communication with the customer. The communication unit 21 includes, but is not limited to, a headset connected to a personal computer or a tablet terminal, a microphone and a speaker of a smartphone or a tablet terminal, and the like.

The voice acquisition unit 14 acquires the voice of the customer, and transmits the voice to the authentication unit 15. It is sufficient that the voice transmitted by the voice acquisition unit 14 to the authentication unit 15 includes at least a portion of the voice of the customer. For example, the voice acquisition unit 14 acquires the voice after the output unit 13 outputs the information (e.g., a question to be used for authentication).

The authentication unit 15 refers to the voice or the feature amount of the voice acquired by the voice acquisition unit 14, and compares the feature amount with the feature amounts of the voices recorded in the authentication database 1B. If authentication is successful, the authentication unit 15 determines that the customer is the person indicated by the identification information.

Next, an example of a hardware configuration in which the voice authentication apparatus 10 and the operator terminal 20 are implemented using one or more computers will be described. The functional units of the voice authentication apparatus 10 and the operator terminal 20 are realized by any combination of hardware and software, such as a CPU (Central Processing Unit) of any computer, a memory, a program loaded into the memory, a storage unit such as a hard disk for storing the program, and a network connection interface. It will be understood by those skilled in the art that there are various modifications of this implementation method and device. In addition to the program stored before shipment of the device, the storage unit may store a program in an optical disk, a magneto-optical disk, a storage medium such as a semiconductor flash memory, or a program downloaded from a server on the Internet.

FIG. 4 is a block diagram illustrating a hardware configuration of the voice authentication apparatus 10 and the operator terminal 20. As shown in FIG. 4, the voice authentication apparatus 10 and the operator terminal 20 include a processor 1A, a memory 2A, an input/output interface 3A, a peripheral circuit 4A, a communication interface 5A, and a bus 6A. The peripheral circuit 4A includes various modules. The voice authentication apparatus 10 and the operator terminal 20 may have no peripheral circuitry 4A. Incidentally, the voice authentication apparatus 10 and the operator terminal 20 may be constituted by a plurality of devices divided physically and/or logically. In this case, each of the plurality of devices may include the above hardware configuration.

The bus 6A is a data transmission path for the processor 1A, the memory 2A, the input/output interface 3A, the peripheral circuit 4A and the communication interface 5A to transmit and receive data to and from each other. The processor 1A is an arithmetic processing unit such as a CPU, a GPU (Graphics Processing Unit), or a microprocessor. The processor 1A can execute the process according to various programs stored in the memory 2A, for example.

The memory 2A is, for example, a memory such as RAM (Random Access Memory) or ROM (Read Only Memory), and stores programs and various data.

The input/output interface 3A includes an interface for acquiring information from an input device, an external device, an external storage unit, an external sensor, a camera, or the like, and an interface for outputting information to an output device, an external device, an external storage unit, or the like. The input device is, for example, a touch panel, a keyboard, a mouse, a microphone, a camera, or the like. The output device is, for example, a display, a speaker, a printer, a lamp, and the like.

The processor 1A can issue instructions to each module and perform operations based on the results of those operations.

The communication interface 5A enables the voice authentication apparatus 10 and the operator terminal 20 to communicate with an external device, and also enables the voice authentication apparatus 10 and the operator terminal 20 to communicate with each other. It is noted that some functions of the voice authentication apparatus 10 or the operator terminal 20 may be configured by a computer.

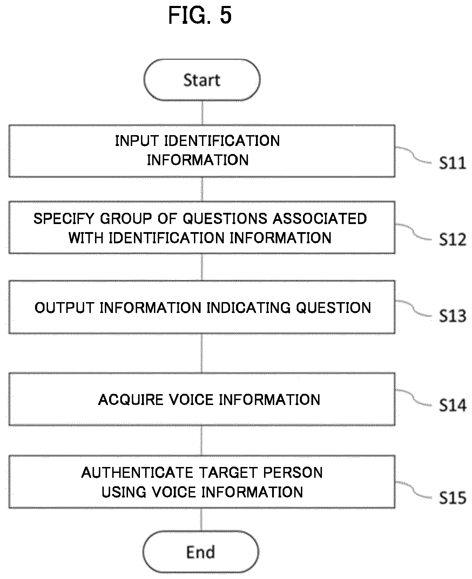

Next, a voice authentication method in this example embodiment will be described with reference to the flowchart of FIG. 5. The operator operates the operator terminal 20 to start telephone communication with the customer. The operator receives the identification information of the customer during the telephone communication, and inputs it to the input unit 22 (S11). The input unit 22 transmits the received identification information of the customer to the identification information acquisition unit 11. The identification information acquisition unit 11 specifies the group of questions associated with the identification information from the question database 2B in the storage unit 12 based on the received identification information of the customer (S12).

From the group of questions associated with the identification information of the customer, the output unit 13 transmits, to the display unit 23, a question with which the text information indicating the answer is associated and recorded. The display unit 23 displays the question transmitted from the output unit 13 (S13). The operator askes the question displayed on the display 23 to the customer on the phone.

After the operator askes the question, the communication unit 21 acquires voice indicating the answer to the question, and transmits the voice to the voice acquisition unit 14 (S14). Namely, the communication unit 21 acquires the voice of the customer after the output unit 13 outputs the question. The voice acquisition unit 14 transmits the received customer's voice to the authentication unit 15. The authentication unit 15 performs authentication using the received voice (S15).

According to the example embodiment described above, when voice authentication of a customer is performed, the voice authentication apparatus 10 selects a question with which text information indicating the answer is associated and recorded, from the questions recorded in a database, and presents the question to an operator to make the operator ask the question. Since the operator makes the customer easily output the voice whose text information is known, it becomes possible to perform the identity verification by voice in a shorter time than the case where a question is generated at random.

### <Second example embodiment

The second example embodiment differs from the first example embodiment in that the voice authentication apparatus 10 functions independently, without communication with the operator terminal 20. This example embodiment describes the voice authentication apparatus 10.

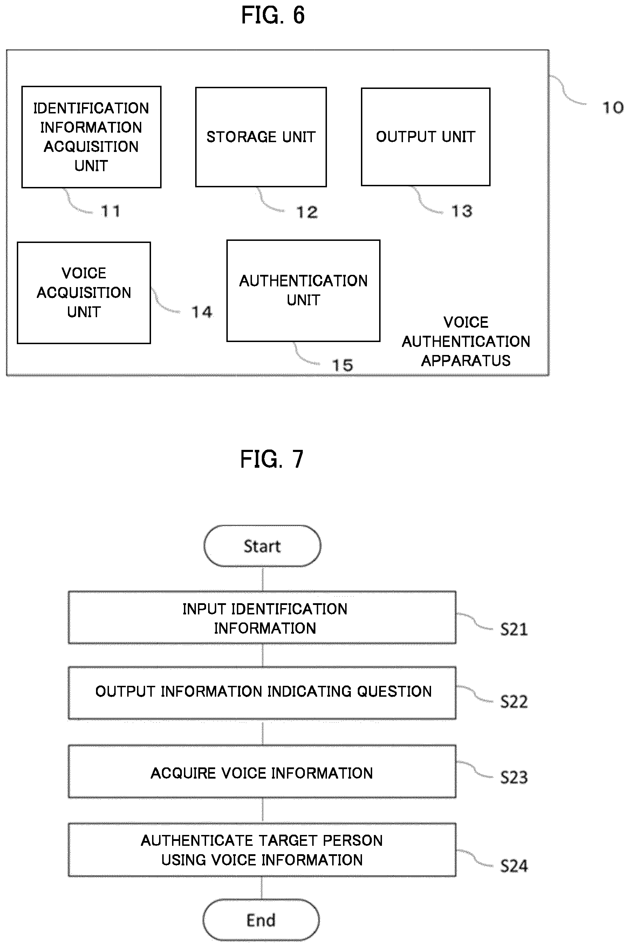

The second example embodiment of the present invention will be described. Using the functional block diagram of FIG. 6, an overall image of the voice authentication apparatus of the second example embodiment will be described. The voice authentication apparatus 10 includes an identification information acquisition unit 11, a storage unit 12, an output unit 13, a voice acquisition unit 14, and an authentication unit 15. These units are connected via a communication network such as the Internet, and can communicate with each other.

The identification information acquisition unit 11 acquires the identification information of the customer. The identification information may be received from an external terminal, or may be directly inputted to the voice authentication apparatus 10. The identification information is exemplified by, but is not limited to, a telephone number, a registration number, a name, a postcode, an address, a birth date, a phonation phrase, an iris, a facial image, a fingerprint, a palmprint, a vein, a gait, and the like.

The output unit 13 uses the identification information acquired by the identification information acquisition unit 11 to specify a question associated with the customer indicated by the identification information from the questions recorded in the question database 2B, and preferentially outputs a question with which the text information indicating the answer is associated and recorded.

The voice acquisition unit 14 acquires the voice of the customer, and transmits the voice to the authentication unit 15. It is sufficient that the voice transmitted by the voice acquisition unit 14 to the authentication unit 15 includes at least a portion of the voice of the customer. For example, the voice acquisition unit 14 acquires the voice after the output unit 13 outputs the information (e.g., a question to be used for authentication).

The authentication unit 15 refers to the voice or the feature amount of the voice acquired by the voice acquisition unit 14, and compares the feature amount with the feature amounts of the voices recorded in the authentication database 1B. If authentication is successful, the authentication unit 15 determines that the customer is the person indicated by the identification information.

Next, an example of a processing flow of the voice authentication apparatus 10 of this example embodiment will be described with reference to a flowchart of FIG. 7. When the identification information of the customer is inputted (S21), the voice authentication apparatus 10 outputs, from the questions associated with the identification information of the customer, a question with which the text information indicating the answer is associated and recorded (S22). After outputting the question, the voice authentication apparatus 10 acquires voice indicating an answer to the question (S23), and performs authentication using the acquired voice (S24).

According to the example embodiment described above, when voice authentication of a customer is performed, the voice authentication apparatus 10 preferentially outputs a question with which the text information indicating the answer is associated and recorded, from the questions recorded in the database. Since the customers are more likely to attempt to answer the question and output voice whose text information is known, it becomes possible to perform identity verification by voice in a short time, compared to the case where the question to the customer is outputted at random.

### <Third example embodiment>

The third example embodiment differs from the first and second embodiments in that the voice authentication apparatus 10 further includes a priority setting unit 16. Other elements of the voice authentication apparatus 10 are the same as those of the first and second example embodiments. Description will be omitted for the same portions as the first and second example embodiments.

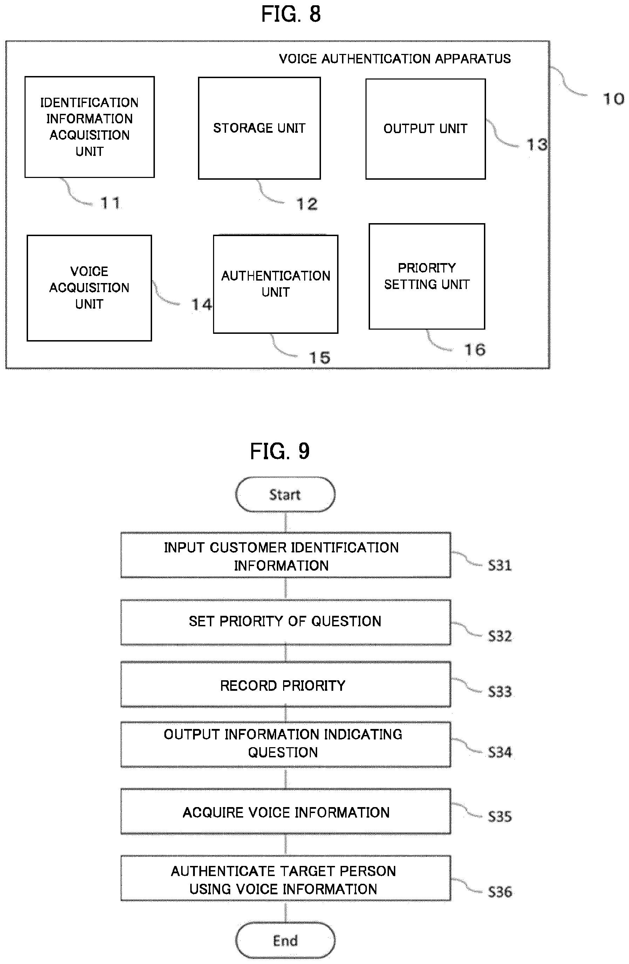

Using the functional block diagram of FIG. 8, an overall image of the voice authentication apparatus of this example embodiment will be described. The voice authentication apparatus 10 includes a priority setting unit 16 in addition to the configuration of the voice authentication apparatus according to the first example embodiment.

The priority setting unit 16 sets the priority of the questions that the output unit 13 outputs from the question database 2B. Similarly to the first example embodiment, the question database 2B stores a plurality of questions for which associated answers are recorded as text information and a plurality of questions for which associated answers are not recorded as text information.

Among a plurality of questions recorded in the question database 2B, the priority setting unit 16 sets a higher priority to the questions for which the answers are recorded as the text information than the questions for which the answers are not recorded as the text information.

The storage unit 12 records the priority set by the priority setting unit 16 in association with the question recorded in the question database 2B.

The output unit 13 selects and outputs the questions having high priorities from the questions recorded in the question database 2B, based on the priorities set for the questions by the priority setting unit 16. The output unit 13 outputs one or more questions, for example, and if the question selected and outputted first is not effective for the customer's identity verification, the question having the next highest priority may be outputted.

Next, an example of a processing flow of the voice authentication apparatus 10 of this example embodiment will be described with reference to a flowchart of FIG. 9. When the identification information of the customer is inputted (S31), the voice authentication apparatus 10 refers to the database based on the identification information of the customer, and sets the priority for outputting the question (S32). Next, the voice authentication apparatus 10 records the set priority in association with the question (S33). Next, from the questions associated with the customer's identification information, the voice authentication apparatus 10 outputs the question having the highest priority (S34). After outputting the question, the voice authentication apparatus 10 acquires the voice indicating the answer to the question (S35), and performs authentication using the acquired voice (S36).

It is noted that the above-described processing flow is an example, and each step from S31 to S36 can be appropriately changed. For example, the step (S32) of setting the priority of the question and the step (S33) of recording the priority in association with the question may be executed before the step (S31) of inputting the identification information of the customer. Also, the priority of the question may be set before the above-described processing flow described is executed, or the priority of the question may be set (updated) again at a timing when a new question is recorded in the question database 2B. The timing at which the priority of the question is set and the timing at which the priority is recorded in relation to the question are not limited.

According to the example embodiment described above, when voice authentication of the customer is performed, the voice authentication apparatus 10 sets the priority of the question to be output, from the questions recorded in the database. Since the voice authentication apparatus can preferentially ask the question with which answer of text information is associated, the customers are more likely to attempt to answer the question and output voice of known text information. Since the text information of the voice outputted by the customer can be predicted, the identity verification by the voice can be carried out in a short time, compared with the case where the question is outputted randomly to the customer.

### <Modification>

Modifications applicable to the first to third example embodiments will be described. Although the voice authentication apparatus 10 of the above-described example embodiments includes the storage device 12, in the modified example, the storage unit 12 may be mounted on an external terminal different from the voice authentication apparatus 10. In this case, the voice authentication apparatus 10 and the storage unit 12 can communicate with each other via a communication network such as the Internet.

Another modification will be described. In the first example embodiment, the operator asks the question outputted from the display unit 23 of the operator terminal 20, and the voice authentication is performed using the voice of the customer answering the question. However, in addition to outputting the question to the operator terminal 20, the output unit 13 may directly ask the question to the customer by automatic voice or the like via the communication unit 21. In this case, the customer listens to the question outputted as the automatic voice through a terminal (not shown) used for the call, and speaks the answer to the question. The communication unit 21 of the operator terminal 20 acquires the voice spoken by the customer.

In the above modification, since the operator does not need to ask the question to the customer, it is possible to reduce the load required for the operator's identification work.

Other modifications will be described below. The display unit 23 in the operator terminal 20 may display the authentication result of the customer, or may display predetermined information associated with the identification information of the customer according to the authentication result.

The voice authentication apparatus 10 may have the function of the operator terminal 20. The same effect can be obtained even in that case.

The number of the operator terminals 20 that communicate with the voice authentication apparatus 10 may be plural, or the voice authentication apparatus 10 may include a plurality of operator terminals 20.

The modifications described above may be suitably combined with the first to third example embodiments, and the modifications may be combined with each other. The configuration described in the first to third example embodiments may be combined with each other.

### <Fourth example embodiment>

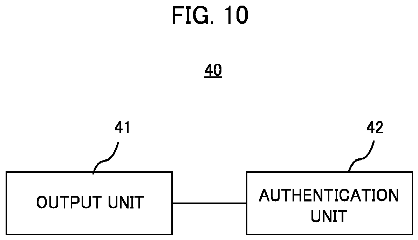

FIG. 10 shows the functional configuration of the voice authentication apparatus according to the fourth example embodiment. The voice authentication apparatus 40 includes an output unit 41 and an authentication unit 42. The output unit 41 preferentially outputs a question with which text information indicating an answer is associated than a question with which text information indicating an answer is not associated. The authentication unit 42 performs voice authentication using voice information acquired as an answer to the question outputted by the output unit 41.

In addition, it is appropriately possible to replace the components in the above-described example embodiments with well-known components without departing from the spirit of the present invention. Also, the technical content of the present invention is not limited to the above-described example embodiments, and various modifications can be made without departing from the spirit of the present invention.

A part or all of the example embodiments described above may also be described as the following supplementary notes, but not limited thereto.

### (Supplementary note 1)

A voice authentication apparatus comprising:
an output unit which preferentially outputs a question with which text information indicating an answer is associated than a question with which text information indicating an answer is not associated, and
an authentication unit which performs voice authentication using voice information acquired as an answer to the question outputted by the output unit.

### (Supplementary note 2)

The voice authentication apparatus according to supplementary note 1, further comprising a recording unit in which questions are recorded in association with user's identification information,
wherein the questions include a question for which text information indicating an answer to the question is associated and recorded, and a question for which text information indicating an answer to the question is not recorded.

### (Supplementary note 3)

The voice authentication apparatus according to supplementary note 1 or 2, wherein the voice information includes voice outputted by a user after the output unit outputs the question.

### (Supplementary note 4)

The voice authentication apparatus according to any one of supplementary notes 1 to 3, further comprising a priority setting unit which sets a priority of the question,
wherein the priority of the question indicates a priority with which the output unit outputs the question,
wherein the recording unit records the priority of the question, and
wherein the priority setting unit sets a higher priority to the question with which the text information indicating the answer is associated than the question with which the test information indicating the answer is not associated.

### (Supplementary note 5)

The voice authentication apparatus according to supplementary note 4, wherein the output unit outputs a question of a next highest priority when the authentication unit failed the authentication.

### (Supplementary note 6)

The voice authentication apparatus according to any one of supplementary notes 1 to 5, wherein the output unit prompts an operator to ask a user the question displayed on the output unit.

### (Supplementary note 7)

A voice authentication method comprising:
preferentially outputting a question with which text information indicating an answer is associated than a question with which text information indicating an answer is not associated, and
performing voice authentication using voice information acquired as an answer to the outputted question.

### (Supplementary note 8)

A recording medium storing a program making a computer execute:
a process which preferentially outputs a question with which text information indicating an answer is associated than a question with which text information indicating an answer is not associated, and
a process which performs voice authentication using voice information acquired as an answer to the outputted question.

While the present invention has been described with reference to the example embodiments, the present invention is not limited to the above example embodiments. Various changes that can be understood by those skilled in the art within the scope of the present invention can be made in the configuration and details of the present invention. Namely, it is needless to say that the present invention includes various modifications and alterations that could be made by a person skilled in the art according to the entire disclosure including the scope of the claims, and the technical philosophy. In addition, each disclosure of the above-mentioned patent documents shall be incorporated by reference to this document.

This application claims priority based on Japanese Patent Application 2019-026871, filed February 18, 2019, and incorporates all of its disclosure herein.

### DESCRIPTION OF SYMBOLS

- 1A: Processor
- 2A: Memory
- 3A: Input/Output Interface
- 4A: Peripheral circuit
- 5A: Communication interface
- 6A: Bus
- 1B: Authentication database
- 2B: Question database
- 10: Voice authentication apparatus
- 11: Identification information acquisition unit
- 12: Storage unit
- 13: Output unit
- 14: Voice acquisition unit
- 15: Authentication unit
- 16: Priority setting unit
- 20: Operator terminal
- 21: Communication unit
- 22: Input unit
- 23: Display unit

## Claims

1. A voice authentication apparatus comprising:
an output unit which preferentially outputs a question with which text information indicating an answer is associated than a question with which text information indicating an answer is not associated, and
an authentication unit which performs voice authentication using voice information acquired as an answer to the question outputted by the output unit.

2. The voice authentication apparatus according to claim 1, further comprising a recording unit in which questions are recorded in association with user's identification information,
wherein the questions include a question for which text information indicating an answer to the question is associated and recorded, and a question for which text information indicating an answer to the question is not recorded.

3. The voice authentication apparatus according to claim 1 or 2, wherein the voice information includes voice outputted by a user after the output unit outputs the question.

4. The voice authentication apparatus according to any one of claims 1 to 3, further comprising a priority setting unit which sets a priority of the question,
wherein the priority of the question indicates a priority with which the output unit outputs the question,
wherein the recording unit records the priority of the question, and wherein the priority setting unit sets a higher priority to the question with which the text information indicating the answer is associated than the question with which the test information indicating the answer is not associated.

5. The voice authentication apparatus according to claim 4, wherein the output unit outputs a question of a next highest priority when the authentication unit failed the authentication.

6. The voice authentication apparatus according to any one of claims 1 to 5, wherein the output unit prompts an operator to ask a user the question displayed on the output unit.

7. A voice authentication method comprising:
preferentially outputting a question with which text information indicating an answer is associated than a question with which text information indicating an answer is not associated, and
performing voice authentication using voice information acquired as an answer to the outputted question.

8. A recording medium storing a program causing a computer to execute:
a process which preferentially outputs a question with which text information indicating an answer is associated than a question with which text information indicating an answer is not associated, and
a process which performs voice authentication using voice information acquired as an answer to the outputted question.
